# EUROPÄISCHE PATENTSCHRIFT

(11) **EP 1 109 271 B1**
(45) Veröffentlichungstag und Bekanntmachung des Hinweises auf die Patenterteilung: **04.02.2004**
(21) Anmeldenummer: 00403189.4
(22) Anmeldetag: 16.11.2000
(51) Int. Cl.: H01R 35/02, B60R 16/02

(54) **Baureihe von Vorrichtungen zur Signalübertragung zwischen zwei Endstellen**
Series of devices for signal transmission between two end stations
Gamme de dispositifs de transmission de signaux entre deux stations terminales

(30) Priorität: 14.12.1999 DE 19960205
(43) Veröffentlichungstag der Anmeldung: 20.06.2001
(73) Patentinhaber: Nexans, 75008 Paris (FR)
(72) Erfinder: Rebhan, Helmut,Dipl.-Ing., 92637 Weiden (DE); Steinert, Alexander,Dipl.-Ing., 92685 Floss (DE)
(74) Vertreter: Döring, Roger, Dipl.-Ing.

(56) Entgegenhaltungen:
- EP-A- 0 243 047
- EP-A- 0 401 028
- EP-A- 0 417 350
- DE-A- 4 329 119
- DE-U- 29 510 286
- US-A- 5 137 463

## Beschreibung

Die Erfindung bezieht sich auf eine Baureihe von Vorrichtungen zur Signalübertragung zwischen zwei Endstellen, zwischen denen mindestens eine in einer im wesentlichen kreisförmigen Kassette untergebrachte Leitung angeordnet ist, an die weiterführende Leitungen an den beiden Endstellen anschließbar sind und deren Länge größer als der Abstand der beiden Endstellen voneinander ist, bei welcher eine der beiden Endstellen relativ zu der anderen bewegbar ist, bei welcher die Kassette aus einem um ihre Achse drehbaren Rotor und einem feststehenden Stator besteht, die einen der Aufnahme der Leitung dienenden Aufnahmeraum begrenzen, und bei welcher an mindestens einer der den Aufnahmeraum begrenzenden Flächen von Rotor und Stator eine Beschichtung aus Isoliermaterial angebracht ist.

Eine derartige Vorrichtung wird beispielsweise für die Übertragung eines Signals zum Auslösen des "Airbag" eines Prallschutzes für Kraftfahrzeuge eingesetzt, aber auch für eine Schiebetürverkabelung oder eine Lenkgetriebeverkabelung von Kraftfahrzeugen. Sie ist dazu im Regelfall zur Übertragung eines elektrischen oder optischen Signals im Lenkrad eines Kraftfahrzeugs untergebracht. "Leitung" im Sinne der Erfindung kann also eine elektrische oder eine optische Leitung sein. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach der EP 0 417 350 A1, die als nächstliegender Stand der Technik angesehen wird, wird für die Signalübertragung elektrischer Strom verwendet. Die Stromübertragung erfolgt durch eine beispielsweise nach Art eines Federhauses zu einem Wickelkörper gewickelte Flachband-Leitung - im folgenden kurz als "FBL" bezeichnet. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Die Windungen der FBL gleiten dabei an den sie begrenzenden Flächen von Stator und Rotor.

In den in der Kassette solcher Vorrichtungen angebrachten FBL sind zwei oder mehr Leiter mit Abstand zueinander angeordnet. Die Breite der FBL nimmt mit größer werdender Anzahl von Leitern zu, wenn die elektrischen Eigenschaften, insbesondere der ohmsche Widerstand, bei gleicher Länge der FBL unverändert bleiben sollen. Da die FBL im Aufnahmeraum der Kassette hochkant angebracht ist, wird statt des Wortes "Breite" das Wort "Höhe" verwendet, womit bei montierter Leitung deren axiale Höhe im Aufnahmeraum der Kassette gemeint ist. Die Abmessungen der Kassette nach der bereits erwähnten EP 0 417 350 A1 sind für die Verwendung einer Leitung mit festliegender Leiterzahl gewählt. Das gilt auch für alle anderen bekannten Kassetten. Zur Berücksichtigung der jeweiligen Leiterzahl bzw. der entsprechenden Höhe einer in einer Kassette unterzubringenden FBL, müssen entweder die Abmessungen der Kassette angepaßt werden oder es wird von den in einer passenden FBL vorhandenen Leitern nur ein Teil benutzt. Beide Varianten sind aufwendig.

Der Erfindung liegt die Aufgabe zugrunde, eine Baureihe aus eingangs geschilderten Vorrichtungen anzugeben, die bei gleich bleibenden Abmessungen ihrer Kassette für FBL mit einer unterschiedlichen Anzahl von Leitern einsetzbar ist.

Diese Aufgabe wird gemäß der Erfindung dadurch gelöst,
- daß mindestens zwei Vorrichtungen mit Kassetten mit gleichen Abmessungen und gleicher axialer Höhe des Aufnahmeraums nebeneinander vorhanden sind, in denen jeweils Leitungen unterschiedlicher axialer Höhe angeordnet sind, und
- daß die Beschichtung als Ausgleichskörper ausgebildet und jeweils derart bemessen ist, daß der zwischen der FBL und dem Rotor bzw. Stator der Kassette in axialer Richtung frei bleibende Raum im wesentlichen durch den Ausgleichskörper ausgefüllt ist.

Mit dieser Baureihe stehen Vorrichtungen für viele unterschiedliche Anforderungen zur Verfügung, deren Kassetten jeweils gleichbleibende Abmessungen - insbesondere des Aufnahmeraums für die FBL - haben. Die Leiterzahl der jeweils einzusetzenden FBL kann so mit Vorteil an den jeweiligen Anwendungsfall angepaßt werden. Es können also FBL mit unterschiedlicher Höhe eingesetzt werden. Der damit variable axiale Freiraum innerhalb des Aufnahmeraums der Kassette wird für jeden Anwendungsfall durch einen Ausgleichskörper mit angepaßter Höhe aufgefüllt. In allen Fällen bleibt die Summe der axialen Höhen von FBL und Ausgleichskörper im wesentlichen konstant. Die FBL kann dadurch keine die Kontaktstellen belastenden großen Bewegungen in axialer Richtung ausführen, auch wenn ihre Höhe klein ist im Verhältnis zur Höhe des Aufnahmeraums. Auch ein Verheddern einzelner Windungen der FBL ist so verhindert. Der jeweils angepaßte Ausgleichskörper kann bei Einsatz von geeignetem Material neben seiner Funktion als Höhenausgleich stets auch die Funktion der Geräuschdämmung übernehmen.

Ausführungsbeispiele des Erfindungsgegenstandes sind in den Zeichnungen dargestellt.

### Es zeigen:

Fig. 1 eine Ansicht einer Kassette mit einer Vorrichtung nach der Erfindung in schematischer Darstellung.
Fig. 2 eine gegenüber Fig. 1 abgewandelte Ausführungsform der Kassette.
Fig. 3 einen Querschnitt durch eine Kassette in vergrößerter Darstellung.
Fig. 4 einen Ausschnitt aus Fig. 3 in weiter vergrößerter Darstellung.

Die Erfindung wird im folgenden - stellvertretend auch für andere Ausführungsformen - für Vorrichtungen mit einer Kassette beschrieben, in der eine Flachbandleitung (FBL) mit elektrischen Leitern angebracht ist. Statt der FBL könnte aber auch eine Leitung mit mindestens einem Lichtleiter eingesetzt werden. Auch eine kombinierte Leitung mit elektrischen und optischen Leitern könnte verwendet werden.

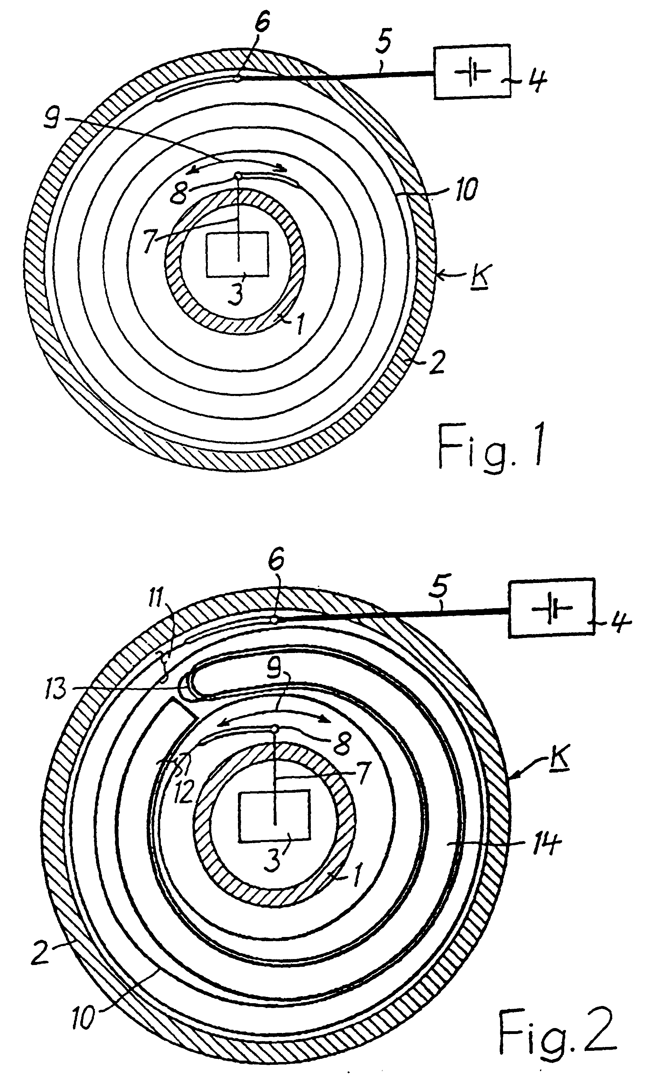

In Fig. 1 sind schematisch zwei beispielsweise kreisförmig ausgebildete Wände 1 und 2 einer Kassette K dargestellt. Sie ist für den Einbau in das Lenkrad eines Kraftfahrzeugs bestimmt. Zur Stromversorgung einer Elektronik 3, durch deren Signal ein Prallsack ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine FBL 10 mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses bzw. Abschlusses an den Endstellen 6 und 8 sind nicht genauer dargestellt. Sie sind prinzipiell in unterschiedlichen Varianten bekannt und hier nicht von Bedeutung.

Die FBL 10 kann gemäß Fig. 1 in der. Kassette K zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickelkörpers verkleinert bzw. vergrößert.

Die FBL 10 kann gemäß Fig. 2 in der Kassette K auch in Windungen angeordnet sein, die in einen äußeren Wickelbereich 11 und einen inneren Wickelbereich 12 unterteilt sind. Die beiden Wickelbereiche 11 und 12 sind durch Klammern gekennzeichnet. Sie umfassen in der aus Fig. 2 ersichtlichen Mittelstellung bzw. in der Montageposition der Kassette K jeweils zwei bis drei Windungen. In den beiden Wickelbereichen 11 und 12 haben die Windungen der FBL 10 entgegengesetzte Wickelrichtungen. Die Wickelbereiche 11 und 12 sind durch eine etwa U-förmig ausgeführte Umkehrstelle 13 miteinander verbunden. Zwischen den beiden Wickelbereichen 11 und 12 ist ein einteiliger, ringförmig ausgeführter Führungskörper 14 angebracht, der die Umkehrstelle 13 umfaßt.

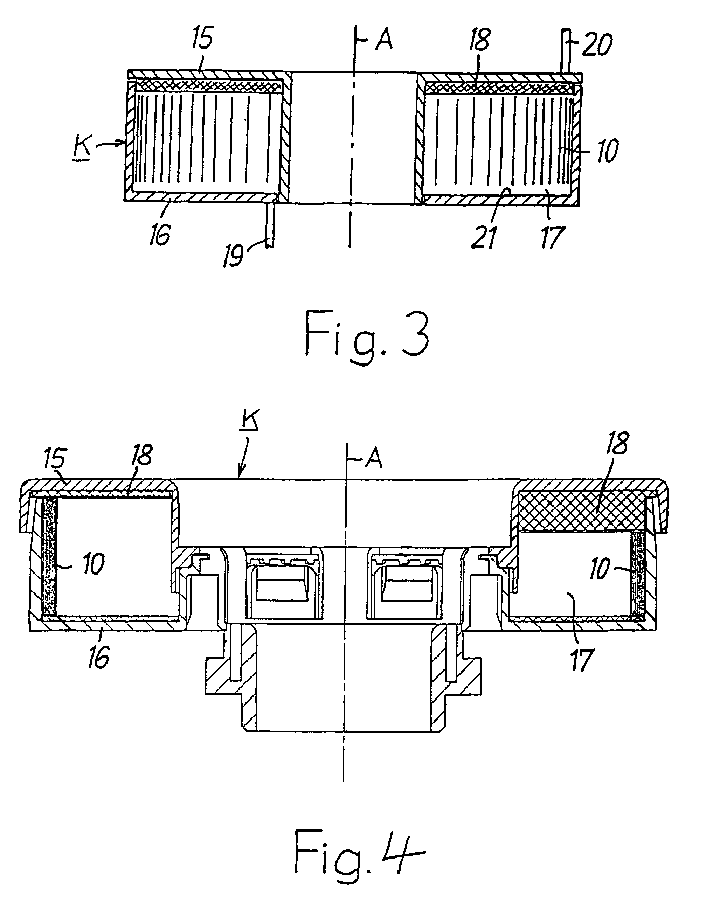

Der Führungskörper 14 ist um seinen Mittelpunkt drehbar und in Umfangsrichtung der Kassette K, also in Richtung des Doppelpfeils 9, leicht beweglich. Er kann als geschlossener Ring mit einem Durchlaß für die Umkehrstelle 13 der FBL 10 ausgeführt sein. Er kann aber auch ein offener Ring sein, der sich nahezu über 360° erstreckt, so wie es in Fig. 3 dargestellt ist. Der Führungskörper 14 besteht vorzugsweise aus Kunststoff. Er ist dadurch sehr leicht, so daß er leichtgängig in der Kassette K bewegt werden kann.

Die Kassette K besteht gemäß Fig. 3 aus einem Rotor 15 und einem Stator 16. Der Rotor 15 ist gegenüber dem Stator 16 um die Achse A der Kassette K drehbar. Er ist dazu beispielsweise mit dem Lenkrad eines Fahrzeugs verbunden, in dessen Lenksäule die Kassette K eingebaut ist. In dem vom Rotor 15 einerseits und vom Stator 16 andererseits umschlossenen Aufnahmeraum 17 sind die FBL 10 und ein Ausgleichskörper 18 angeordnet, der im dargestellten Ausführungsbeispiel als einteiliger Körper am Rotor 15 angebracht ist. An den Enden der FBL 10 sind weiterführende, aus der Kassette K herausgeführte elektrische Leitungen 19 und 20 angeschlossen.

Bei einer Drehung des Rotors 15 werden die FBL 10 bzw. deren Windungen quer zur Achse A der Kassette K bewegt. Zwischen FBL 10 und Ausgleichskörper 18 liegt daher ein ausreichend großer Spalt, durch den sichergestellt ist, daß die FBL 10 nicht eingeklemmt wird. Bei der Bewegung der FBL 10 gleiten deren Windungen auf der nach innen weisenden Fläche 21 des Stators 16. Die Fläche 21 kann mit geräuschdämmendem Material beschichtet sein, beispielsweise mit einem vliesförmigen, aus Fasern bestehenden Material.

Die Abmessungen der Kassette K, insbesondere die axiale Höhe des Aufnahmeraums 17 derselben, sollen zum Aufbau einer Baureihe von Vorrichtungen unverändert bleiben, unabhängig von der axialen Höhe der FBL 10. Wenn die FBL 10 mit einer entsprechend großen Anzahl von Leitern hoch ist (linke Seite von Fig. 4), dann wird ein entsprechend dünner Ausgleichskörper 18 mit geringer axialer Höhe eingesetzt. Bei einer niedrigeren FBL 10 (rechte Seite von Fig. 4) wird ein axial höherer Ausgleichskörper 18 verwendet. Die axiale Höhe des Ausgleichskörpers 18 wird jeweils so bemessen, daß der bei eingesetzter FBL 10 verbleibende axiale Freiraum im Aufnahmeraum 17 der Kassette K im wesentlichen von demselben ausgefüllt wird. Die Summe der axialen Höhen von FBL 10 und Ausgleichskörper 18 ist also in allen Fällen etwa konstant. Zwischen dem Ausgleichskörper 18 und der Fläche 21 der Kassette K bleibt stets genug Freiraum, damit die FBL 10 sich dazwischen bewegen kann.

Der Ausgleichskörper 18 kann - so wie in Fig. 3 dargestellt - einteilig als Ring ausgeführt sein. Er kann aber in Umfangsrichtung auch unterbrochen sein und beispielsweise aus Ringsegmenten bestehen. Der Ausgleichskörper 18 kann auch aus in radialer Richtung der Kassette K verlaufenden Rippen bestehen. Als Material für den Ausgleichskörper 18 wird Kunststoff verwendet. Geeignet sind beispielsweise aufgeschäumte Materialien, beispielsweise aus Polyethylen, oder auch Vliesstoffe. Solche Materialien haben gleichzeitig geräuschdämmende Eigenschaften, so daß beim Betrieb eines Fahrzeugs keine störenden Klappergeräusche entstehen.

Im dargestellten Ausführungsbeispiel ist der Ausgleichskörper 18 als einteiliger Körper am Rotor 15 angebracht. Er könnte aber auch am Stator 16 angeordnet werden. Auch eine Aufteilung des Ausgleichskörpers 18 in zwei Teilkörper ist möglich, von denen einer am Rotor 15 und der andere am Stator 16 angebracht ist.

## Patentansprüche

1. Baureihe von Vorrichtungen zur Signalübertragung zwischen zwei Endstellen (6,8), zwischen denen mindestens eine in einer im wesentlichen kreisförmigen Kassette (K) untergebrachte Leitung (10) angeordnet ist, an die weiterführende Leitungen (19,20) an den beiden Endstellen (6,8) anschließbar sind und deren Länge größer als der Abstand der beiden Endstellen (6,8) voneinander ist, bei welcher eine der beiden Endstellen relativ zu der anderen bewegbar ist, bei welcher die Kassette (K) aus einem um ihre Achse drehbaren Rotor (15) und einem feststehenden Stator (16) besteht, die einen der Aufnahme der Leitung (10) dienenden Aufnahmeraum (17) begrenzen, und bei welcher an mindestens einer der den Aufnahmeraum (17) begrenzenden Flächen von Rotor (15) und Stator (16) eine Beschichtung aus Isoliermaterial angebracht ist, **dadurch gekennzeichnet,**
- **daß** mindestens zwei Vorrichtungen mit Kassetten (K) mit gleichen Abmessungen und gleicher axialer Höhe des Aufnahmeraums (17) nebeneinander vorhanden sind, in denen jeweils Leitungen (10) unterschiedlicher axialer Höhe angeordnet sind, und
- **daß** die Beschichtung als Ausgleichskörper (18) ausgebildet und jeweils derart bemessen ist, daß in jeder der Kassetten (K) der zwischen der Leitung (10) und dem Rotor (15) bzw. Stator (16) derselben in axialer Richtung frei bleibende Raum im wesentlichen durch den Ausgleichskörper (18) ausgefüllt ist.

2. Vorrichtung für eine Baureihe nach Anspruch 1, **dadurch gekennzeichnet, daß** der Ausgleichskörper (18) als einteiliger Ring ausgeführt ist.

3. Vorrichtung für eine Baureihe nach Anspruch 1, **dadurch gekennzeichnet, daß** der Ausgleichskörper (18) in Umfangsrichtung unterbrochen ist und aus Ringsegmenten besteht.

4. Vorrichtung für eine Baureihe nach Anspruch 1, **dadurch gekennzeichnet, daß** der Ausgleichskörper (18) aus in radialer Richtung der Kassette (K) verlaufenden Rippen besteht.

## Claims

1. A series of devices for transmitting signals between two terminals (6, 8), between which at least one conductor (10) is implemented in an essentially circular cartridge (K), to which conductors (19, 20) leading elsewhere can be connected to both terminals (6, 8) while that at least one conductor (10) is longer than the distance between the two terminals (6, 8), in which one of the two terminals is movable with respect to the other one, and in which the cartridge (K) comprises a rotor (15) that can rotate about its axis, and a stator (16), which is stationary and which limit the storage space (17) for storing the conductor (10), and in which a layer of insulation material has been applied to at least one of the areas of the rotor (15) and the stator (16) limiting the storage space (17), **characterised in that**
- at least two devices with cartridges (K) with identical dimensions and the same axial height of the storage space (17) are in place alongside each other, in which conductors (10) of differing axial height are implemented, and
- the coating has been developed as a compensating body (18) and is designed such that the space that remains free in an axial direction between the conductor (10) and the rotor (15) and/or stator (16) of the cartridge (K) is essentially filled by the compensating body (18).

2. Device for a series according to Claim No. 1, **characterised in that** the compensating body (18) is executed as a ring in one piece.

3. Device for a series according to Claim No. 1, **characterised in that** the compensating body (18) is interrupted in the circumferal direction and comprises ring segments.

4. Device for a series according to Claim No. 1, **characterised in that** the compensating body (18) comprises a series of ribs in the radial direction of cartridge (K).

## Revendications

1. Gamme de dispositifs pour la transmission de signaux entre deux terminaux (6, 8), entre lesquels est disposé au moins un câble (10) logé dans une cassette globalement circulaire (K), sur laquelle peuvent être raccordés des câbles sortants (19, 20) au niveau des deux terminaux (6, 8) et dont la longueur est plus grande que la distance entre les deux terminaux (6, 8), un des deux terminaux étant mobile par rapport à l'autre, la cassette (K) se composant d'un rotor (15) tournant autour de son axe et d'un stator fixe (16) qui délimitent un espace (17) servant à recevoir le câble (10), au moins l'une des surfaces du rotor (15) et du stator (16) limitant l'espace de réception (17) étant revêtue d'un matériau isolant, **caractérisée par le fait**
- **qu'**au moins deux dispositifs avec cassettes (K) ayant les mêmes dimensions et la même hauteur axiale de l'espace de réception (17) sont présents côte à côte, dans lesquels des câbles (10) de différente hauteur axiale sont disposés, et
- **que** le revêtement a la forme d'un élément compensateur (18) et est dimensionné de telle sorte que l'espace resté libre dans le sens axial entre le câble (10) et le rotor (15) ou le stator (16) de chacune des cassettes (K) est comblé en grande partie par l'élément compensateur (18).

2. Dispositif pour une gamme selon la revendication 1, **caractérisé par le fait que** l'élément compensateur (18) se présente sous la forme d'un anneau monobloc.

3. Dispositif pour une gamme selon la revendication 1, **caractérisé par le fait que** l'élément compensateur (18) est interrompu dans le sens périphérique et se compose de segments annulaires.

4. Dispositif pour une gamme selon la revendication 1, **caractérisé par le fait que** l'élément compensateur (18) se compose de nervures en sens radial de la cassette (K).
